# EUROPÄISCHE PATENTANMELDUNG

(11) **EP 1 533 554 A1**
(43) Veröffentlichungstag der Anmeldung: **25.05.2005**
(21) Anmeldenummer: 04020188.1
(22) Anmeldetag: 25.08.2004
(51) Int. Cl.: F16L 11/12

(54) **Schlauch mit Rippen aufweisender Innenschicht**

(30) Priorität: 20.11.2003 DE 10354211
(71) Anmelder: VERITAS AG, 63571 Gelnhausen (DE)
(72) Erfinder: Severengiz, Tevfik, Dr., 63579 Gelnhausen (DE); Ehret, Martin, 63579 Gelnhausen (DE)
(74) Vertreter: Grünecker, Kinkeldey, Stockmair & Schwanhäusser Anwaltssozietät

(57) **Zusammenfassung**

Die vorliegende Erfindung beschreibt einen Schlauch der zumindest an einem Ende auf der lnnenseite umlaufende Rippen aufweist.

## Beschreibung

Die vorliegende Erfindung betrifft einen Schlauch, insbesondere zur Beförderung von Gasen, wie Wasserstoff und flüssigen Medien, wie Kraftstoffen, Kühlmitteln, Ölen; Bremsflüssigkeiten und Ähnlichem.

Verschiedene Arten von Schläuchen sind zum Einsatz in einer Kraftstoffleitungsanlage eines Kraftfahrzeuges oder eines anderen Fahrzeuges bekannt, die aus verschiedenen Materialien hergestellt werden können. Ein solcher Schlauch kann als Kraftstoffleitung selbst oder auch als Verbindungsstück zum Verbinden einer Kraftstoffleitung verwendet werden und flexibel oder starr ausgebildet sein. Im allgemeinen werden durch die Leitungen Benzin- oder Dieselkraftstoff zum Motor gefördert.

Hierbei weisen diese Schläuche häufig eine Vielzahl von Schichten aus Materialien unterschiedlicher chemischer Zusammensetzung auf. Aus Sicherheitsgründen und im Hinblick auf die gängigen Umweltschutz- und Sicherheitsüberlegungen ist hierbei eine Anforderung an die Rohre bzw. Schläuche, dass die Ausdunstungen der gebräuchlichen Kraftstoffe durch Wandungen und Enden möglichst stark unterdrückt wird. Darüber hinaus sollten die Schläuche gegenüber hohen und niedrigen Temperaturen beständig sowie flammbeständig oder selbsterlöschend sein. Um diese Anforderungen zu erfüllen, hat es sich z. B. bewährt, eine Barriere- oder Sperrschicht in dem Schlauch vorzusehen, um die Permeation der Kraftstoffe zu unterdrücken, sowie weitere Schichten, z. B. eine Schutzschicht oder eine Verstärkungsschicht, um den Schlauch die notwendige Festigkeit und Beständigkeit zu verleihen. Auch die Anschlüsse, wie Stutzen, müssen weitgehend frei von Leckage und sogenannten Wicking-Effekten (die Durchwanderung des Kraftstoffs durch die Schicht, die mit der z. B. Kraftstoff in Kontakt steht) sein.

Derartige Schläuche weisen häufig einen Aufbau auf, bei dem als innerste Schicht eine Sperrschicht vorgesehen ist, vorzugsweise aus einem fluorhaltigen Thermoplasten. Über dieser Innenschicht befinden sich weitere funktionelle Schichten, wie Schutzschichten oder Verstärkungsschichten und Haftvermittlungsschichten.

Ein Problem bei derartigen Schlauchsystemen ist, dass diese Schläuche beim Aufstecken auf andere Formteile, beispielsweise Tankeinfüllstutzen in Abhängigkeit von deren Oberflächengüte, nicht immer die notwendige Dichtigkeit zeigen. Derartige Tankeinfüllstutzen beispielsweise sind Formteile, die eine Formteilungsebene aufweisen. Die Fehlstellen machen sich als Vertiefungen oder als Erhebungen ungünstig bemerkbar, an diesen können dann Undichtigkeiten auftreten. Dies ist insbesondere bei Gas- und Flüssigkraftstoffsystemen äußerst nachteilig.

Im Stand der Technik sind daher verschiedene Ansätze zur Überwindung dieses Problems entwickelt worden. Dabei wird entweder durch Anbringung von Schlauchschellen versucht, die mechanische Verbindung von Schlauch und Tankeinfüllstützen zu verbessern, so dass eine ausreichende Dichtigkeit vorliegt. Die Rauheitstiefe, die mit diesem System abgedichtet werden kann, ist auf 10 bis 40 µm begrenzt. Alternative Ansätze betreffen die Einführung von weiteren flexiblen, elastischen Innenschichten vor dem Thermoplasten als Innenschicht, um beispielsweise eine bessere Anpassung an der Tankeinfüllstutzenoberfläche hervorzurufen. Weiterhin können externe Dichtungsringe, Dichtungsfilme oder Dichtungsklebstoffe eingesetzt werden. Der Nachteil dieser Lösungsansätze aus dem Stand der Technik ist jedoch, dass entweder zusätzliche Schichten vorgesehen werden müssen. Dies verteuert entweder die Herstellung der Schläuche oder erhöht die Komplexität des Einbaus derartiger Schläuche in Kraftstoffsysteme. Außerdem tragen diese Schichten zum sogenannten "Wicking-Effekt" bei.

Die Aufgabe der vorliegenden Erfindung ist es also einen Schlauch zur Verfügung zu stellen, der die oben genannten Probleme überwindet.

Diese Aufgabe wird erfindungsgemäß durch einen Schlauch gelöst, der zumindest an einem Ende vorzugsweise an beiden Enden auf der Innenseite umlaufende Rippen aufweist.

Eine derartige Ausgestaltung des Schlauchendes, bei gleichzeitiger Beibehaltung des üblichen Schlauchinnendurchmessers, ermöglicht überraschenderweise eine verbesserte Dichtigkeit bei Schlauchanschlüssen auf Kunststoffformteilen oder Metallformteilen, beispielsweise Tankeinfüllstutzen. Durch die innen umlaufenden Rippen, die partiell den Innendurchmesser des Schlauchs verringern, erhöht sich der Anpressdruck des Schlauches an den Tankeinfüllstutzen. Parallel dazu fließt mindestens die erste thermoplastische Schicht unter dem Anpressdruck mit Hilfe der folgenden Elastomerschicht und einer Schelle optimal auf der Oberfläche, so dass eine bessere Dichtigkeit gegeben ist. Ein weiterer Vorteil ist, dass sich die Abzugskräfte der Schläuche erhöhen. Damit kann das Abrutschen von der Anbindung auch ohne Schelle verhindert werden.

Die erfindungsgemäße Ausgestaltung des Schlauchendes vermeidet darüber hinaus den Einsatz zusätzlicher Innenschichten oder zusätzlicher Materialien, so dass die damit verbundenen Nachteile des Standes der Technik nicht auftreten. Gleichzeitig kann die Formung der innen umlaufenden Rippen durch übliche Formungswerkzeuge erfolgen, beispielsweise direkt bei der Herstellung oder bei der Konfektionierung für einen gewünschten Einsatzzweck, ausgehend von vorgeformten Schlauchen ohne innen umlaufende Rippen.

Erfindungsgemäß können die innen umlaufenden Rippen beispielsweise durch eine entsprechende Ausgestaltung einer Innenschicht des Schlauchs geformt werden. Alternativ ist es auch möglich, dass , bei mehrschichtigen Schläuchen, auch die weiteren Schichten des Schlauches eine derartige Struktur aufweisen, so dass die innen umlaufenden Rippen durch einen wesentlichen Teil des Querschnitts des Schlauches vorliegen. Die erste Option wird einschichtig genannt, die zweite mehrschichtig, z. B. bis zu sechsschichtig.

Die vorliegende Erfindung wird nun, unter Verweis auf die begleitenden Zeichnungen, weiter beschrieben. Figur 1 zeigt einen möglichen Schichtaufbau eines erfindungsgemäßen Schlauchs. Figuren 2 und 2 a zeigen weitere Möglichkeiten eines Schichtaufbaus für einen erfindungsgemäßen Schlauch. Figur 3 zeigt eine schematische Darstellung mit vier innen umlaufenden Rippen. Figuren 4 a und 4 b zeigen jeweils schematisch weitere Ausgestaltungen mit vier umlaufenden Rippen. Dabei ist einmal die Schlauchform derart gewählt, dass die umlaufenden Rippen lediglich in der Innenschicht ausgebildet sind (Figur 4 a ) und andererseits in allen vorliegenden Schichten ausgebildet sind (Figur 4 b). Die Anzahl der Rippen ist der zu dichtenden Fläche proportional und beträgt mindestens 1. Der Anzahl und Form sind keine Grenzen gesetzt.

Erfindungsgemäße Schläuche weisen bevorzugt als Innenschicht eine Sperrschicht aus einem fluorhaltigen Thermoplasten auf, insbesondere bevorzugt aus PVDF, THV, CTFE, ECTFE, insbesondere THV, oder Polyamide. Auch die klassischen Elastomere wie NBR und FPM und thermoplastische Elastomere, die die geforderte Medienbeständigkeit aufweisen, sind geeignet, Sie können einschichtig oder mehrschichtig, aus dem gleichen oder aber unterschiedlichen Schichten aufgebaut und elektrisch leitfähig sein. Weiter weisen die erfindungsgemäßen Schläuche bevorzugt eine weitere Schicht aus einem Gummimaterial auf der ersten Schicht auf, beispielsweise NBR, ECO, CSM, CM, ACM, AEM, CR, EPDM oder EVM, insbesondere bevorzugt NBR oder ECO. Zusätzlich können weitere funktionale Schichten vorgesehen sein, wie Verstärkungsschichten, bevorzugt aus einem faserartigen Material, wie Baumwollfasern, Zellulosefasern, Reyonfasern, Nylonfasern, Polyesterfasern oder Aramidfasern, die durch Umwickeln, Umstricken oder Umflechten auf den Schlauch aufgebracht sind. Weitere mögliche Schichten sind Haftvermittlungsschichten, leitfähige Schichten (zum Schutz vor elektrostatischer Aufladung), thermoplastische Schutzschichten und farbige Markierungsschichten.

Die jeweiligen Dicken der Schichten werden in Abhängigkeit vom gewünschten Einsatzzweck gewählt, gegebenenfalls unter Berücksichtigung von Materialkosten und Herstellungskosten.

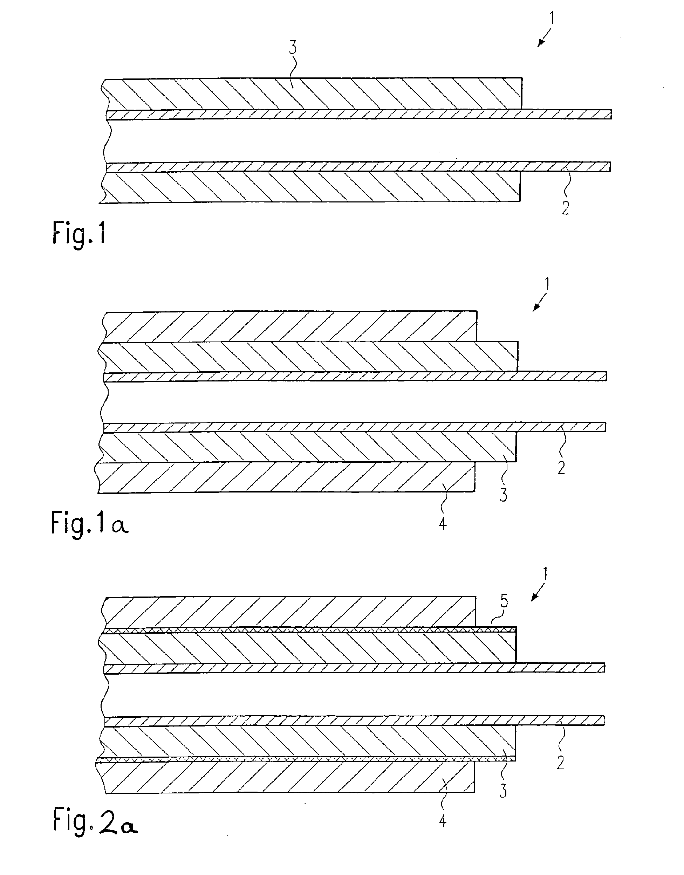

Figur 1 zeigt den Schichtaufbau einer erfindungsgemäßen Kraftstoffleitung 1, gemäß einer ersten Ausführungsform. Die Kraftstoffleitung 1 weist eine Sperrschicht 2 auf, bevorzugt aus einem fluorhaltigen Thermoplasten. Weiterhin ist eine Elastomerschicht 3 vorgesehen, die die Sperrschicht kraft- und formschlüssig umschließt. Figur 1 a zeigt den Schichtaufbau einer erfindungsgemäßen Kraftstoffleitung 1, gemäß einer weiteren Ausführungsform. Die Kraftstoffleitung 1 weist eine Sperrschicht 2 auf, bevorzugt aus einem fluorhaltigen Thermoplasten. Weiterhin ist eine Elastomerschicht 3 vorgesehen, die die Sperrschicht kraft- und formschlüssig umschließt. Abschließend ist eine Schutzschicht 4 vorgesehen.

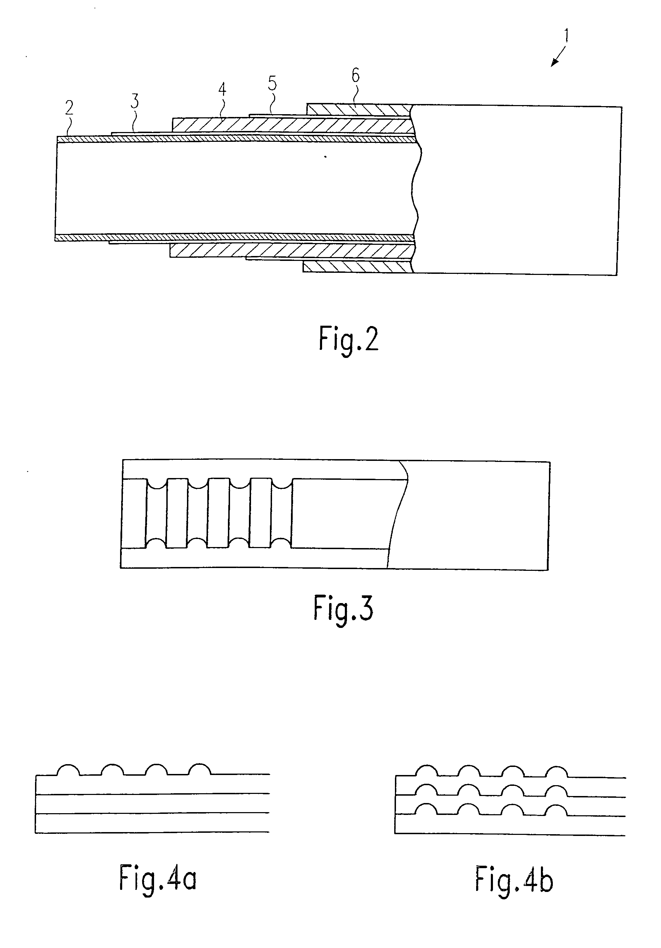

Figur 2 zeigt eine zweite Ausführungsform des Schichtaufbaus eines erfindungsgemäßen Schlauches. Hierbei ist auf der Schutzschicht 4 weiterhin eine Verstärkungsschicht 5 aus einem faserartigen Material vorgesehen. Abschließend ist wiederum eine Schutzschicht 6 vorgesehen. Alternativ, wie in Figur 2 a gezeigt, kann die Verstärkungsschicht 5 auch zwischen der Elastomerschicht und der Schutzschicht vorgesehen sein.

Die erfindungswesentlichen innen umlaufenden Rippen sind in Figur 3 schematisch dargestellt. Diese Rippen können irgendeine gewünschte Form aufweisen, die beispielsweise durch die Möglichkeiten der Produktionsanlage bestimmt werden. Es ist jedoch bevorzugt, wenn die erfindungsgemäßen Rippen einen runden bzw. halbkreisförmigen Querschnitt aufweisen. Weiterhin ist es bevorzugt, wenn die Rippen lediglich am Ende des Schlauches vorgesehen sind, da diese Ausführungsform am wenigsten Kosten intensiv ist.

Die Rippen weisen bevorzugt eine Höhe auf, die 0,5 bis 15 % des Innendurchmessers ausmacht. Bevorzugt ist der Bereich von 1 bis 8 %, insbesondere 2,5 %. Bei einem Innendurchmesser von 40 mm ergibt sich also eine besonders bevorzugte Rippenhöhe von 1 mm.

Erfindungsgemäß bevorzugt ist es, wenn 1 bis 25 innen umlaufende Rippen am Schlauchende vorgesehen sind. Die Anzahl, Höhe und Form der Rippen werden in Abhängigkeit von der zu dichtenden Anschlussfläche bestimmt. Dabei ist es insbesondere bevorzugt, wenn alle Rippen die gleiche Höhe und die gleiche Breite aufweisen und jeweils gleich weit von einander entfernt sind.

Der Abstand der ersten innen umlaufenden Rippe dürfte nicht den gleichen Abstand zum Schlauchende aufweisen, wie zur darauf folgenden innen umlaufenden Rippe. Insbesondere bevorzugt beträgt die Breite jeder Rippe von 1 bis 14 mm, insbesondere bevorzugt 9 mm. Falls vorhanden, ist der Abstand zwischen jeder Rippe, sowie der Abstand von der ersten Rippe zum Schlauchende, von 2 bis 10 mm, bevorzugt 6 mm.

Die erfindungsgemäßen Rippen können durch geeignete Formgebungsverfahren hergestellt werden, beispielsweise unter Einsatz von vorgeheizten metallischen Formungsdornen und -hülsen, die um das Schlauchende gelegt werden. Bei einem mehrstufigen Coextrusionsverfahren kann eine derartige Formgebung auch als Zwischenschritt erfolgen, vor der Aufbringung der abschließenden Schutzschicht.

## Patentansprüche

1. Schlauch, zur Beförderung von flüssigen und gasförmigen Medien, insbesondere von Kraftstoffen, **dadurch gekennzeichnet, dass** der Schlauch an mindestens einem Ende innen umlaufende Rippen aufweist.

2. Schlauch nach Anspruch 1, **dadurch gekennzeichnet, dass** der Schlauch an mindestens einem Ende, mindestens eine innen umlaufende Rippe aufweist.

3. Schlauch nach Anspruch 1, **dadurch gekennzeichnet, dass** die Rippen leitfähig sind.

4. Schlauch nach Anspruch 1, **dadurch gekennzeichnet, dass** die Rippen nicht leitfähig sind.

5. Schlauch nach Anspruch 1, **dadurch gekennzeichnet, dass** die Rippen eine Höhe von 0,5 bis 15 % des Innendurchmessers des Schlauchs aufweisen.

6. Schlauch nach Anspruch 1, **dadurch gekennzeichnet, dass** die Rippen mindestens 1 schichtig, vorzugsweise 1 bis 6 schichtig sind.

7. Schlauch nach einem der vorstehenden Ansprüche, **dadurch gekennzeichnet, dass** die Rippen die gleiche Breite aufweisen.

8. Schlauch nach einem der vorstehenden Ansprüche, **dadurch gekennzeichnet, dass** die Rippen unterschiedlich breit sind.

9. Schlauch nach einem der vorstehenden Ansprüche, **dadurch gekennzeichnet, dass** die Rippen im gleichen Abstand voneinander angeordnet sind, wobei der Abstand vom Schlauchende zur ersten Rippe davon verschieden ist.

10. Schlauch nach Anspruch 4, **dadurch gekennzeichnet, dass** die Rippen nicht im gleichen Abstand voneinander angeordnet sind, wobei der Abstand vom Schlauchende zur ersten Rippe davon verschieden ist.

11. Schlauch nach mindestens einem der vorstehenden Ansprüche, **dadurch gekennzeichnet, dass** der Schlauch eine innenliegende Sperrschicht und eine darüber vorgesehene Elastomerschicht aufweist.

12. Schlauch nach mindestens einem der vorstehenden Ansprüche, **dadurch gekennzeichnet, dass** der Schlauch eine innenliegende Sperrschicht, eine darüber vorgesehene Elastomerschicht und eine darüber vorgesehene Schutzschicht aufweist.

13. Schlauch nach mindestens einem der vorstehenden Ansprüche, **dadurch gekennzeichnet, dass** der Schlauch eine innenliegende Sperrschicht, eine darüber vorgesehene Elastomerschicht und eine darüber vorgesehene Verstärkungsschicht aufweist.

14. Schlauch nach mindestens einem der vorstehenden Ansprüche, **dadurch gekennzeichnet, dass** der Schlauch eine innenliegende Sperrschicht, eine darüber vorgesehene Elastomerschicht, eine darüber vorgesehene Verstärkungsschicht und eine Schutzschicht aufweist.

15. Schlauch nach Anspruch 11, **dadurch gekennzeichnet, dass** die Sperrschicht einen fluorhaltigen Thermoplasten umfasst, bevorzugt THV.

16. Schlauch nach Anspruch 1, **dadurch gekennzeichnet, dass** die dem Medium zugewandte Schicht ein Elastomer ist.

17. Schlauch nach Anspruch 1, **dadurch gekennzeichnet, dass** die dem Medium zugewandte Schicht ein thermoplastisches Elastomer ist.

18. Schlauch nach einem der vorstehenden Ansprüche, **dadurch gekennzeichnet, dass** die Rippen
a) lediglich durch die Innenschicht geformt sind; oder
b) sich im wesentlichen über die gesamten Schichten des Schlauches erstrecken.

19. Verwendung eines Schlauches nach Anspruch 1 bis 18 zur Beförderung von gasförmigen und flüssigen Kraftstoffen.

20. Verwendung eines Schlauches nach Anspruch 1 bis 18 zur Beförderung von Gasen, wie Wasserstoff und flüssigen Medien, wie Kältemitteln, Motorölen, Bremsflüssigkeiten, Hydraulikölen, und mit Medien kontaminierte Heißluft usw..
